Europäisches Patentamt

European Patent Office

Office européen des brevets

(19)

(11) Numéro de publication: **0 050 567**
**A1**

(12) **DEMANDE DE BREVET EUROPEEN**

(21) Numéro de dépôt: **81401628.3**

(22) Date de dépôt: **16.10.81**

(51) Int. Cl.³: **B 60 B 17/00**

(30) Priorité: **17.10.80 FR 8022286**

(43) Date de publication de la demande: **28.04.82**
**Bulletin 82/17**

(84) Etats contractants désignés: **BE DE FR GB IT LU NL**

(71) Demandeur: **COMPAGNIE FRANCAISE DES ACIERS SPECIAUX, 8 rue de la Rochefoucauld, F-75009 Paris (FR)**

(72) Inventeur: **Poullle, Jean, 36 avenue Adolphe Geeraert, F-59240 Dunkerque (FR)**

(74) Mandataire: **Le Brusque, Maurice, CREUSOT-LOIRE 15 rue Pasquier, F-75383 Paris Cedex 08 (FR)**

(54) **Procédé et dispositif d'insonorisation d'une roue de chemin de fer.**

(57) L'invention a pour objet un procédé et un dispositif d'insonorisation d'une roue de chemin de fer (1) au moyen d'un profilé circulaire en forme d'anneau (2) s'appliquant sur la paroi interne de la jante (11) de la roue (1).

Selon l'invention, on interpose entre la face extérieure (20) de l'anneau (2) et la paroi interne (16) de la jante (11) une couche isolante (3) en matière élastique déformable, on colle la couche isolante (3) sur l'anneau (2) et sur la paroi (16) au moyen d'un adhésif et, l'anneau étant coupé par une fente (21), on exerce sur sa face interne une pression radiale déterminant un écrasement de la matière élastique (3) avec augmentation du diamètre de l'anneau (2) et élargissement de la fente (21) puis l'on bride l'anneau dans cette position et à ce diamètre élargi, la matière (3) restant écrasée entre l'anneau élargi (2) et la paroi (16).

L'invention s'applique, de façon générale, chaque fois qu'il y a lieu d'amortir les vibrations d'une roue de chemin de fer, et plus spécialement pour en atténuer le bruit de roulement.

EP 0 050 567 A1

1

"Procédé et dispositif d'insonorisation d'une roue
de chemin de fer"

L'invention a pour objet un procédé et un dispositif d'insonorisation d'une roue métallique et plus spécialement d'une roue de chemin-de-fer.

L'invention peut être utilisée notamment pour atténuer le bruit provoqué par le roulement des wagons de chemin-de-fer sur les rails grâce à l'amortissement des vibrations de la roue.

Il y a déjà longtemps que l'on a cherché à amortir les vibrations des roues métalliques, en particulier pour atténuer le bruit de roulement.

On a proposé à cet effet, d'appliquer sur la jante de la roue un anneau métallique qui, dans le mode de réalisation décrit par exemple dans le brevet britannique n° 445.124, s'engage dans une gorge de maintien ménagée sur la paroi interne de la jante.

L'anneau doit cependant rester libre dans la gorge pour que se produise l'effet d'atténuation des vibrations qui résulte d'une interférence des régimes vibratoires de l'anneau et de la roue. Les performances d'un dispositif utilisant ce principe sont assez limitées.

On a aussi proposé de recouvrir au moins une partie de la jante de la roue d'une couche d'un matériau amortisseur interposé entre la jante et une virole métallique qui protège la couche d'amortissement et la maintient appliquée contre la jante.

Une telle disposition, si elle peut convenir par exemple à des roues d'engrenages, est plus difficile à adapter à des roues de chemin de fer d'assez grand diamètre et tournant à grande vitesse, car la virole métallique risque de se détacher. On peut maintenir la virole au moyen de pattes de fixation sur le voile de la roue, mais celles-ci augmentent le poids et l'encombrement du dispositif et assurent en outre une liaison entre la virole et la roue préjudiciable à l'amortissement des vibrations.

L'invention a pour objet un nouveau procédé d'insonorisation et un nouveau dispositif ne présentant pas ces inconvénients.

Les recherches qui ont conduit à l'invention ont permis d'établir que la capacité d'insonorisation de la couche isolante était liée essentiellement au maintien permanent de l'adhérence de celle-ci sur la paroi de la roue et sur l'anneau.

A cet effet la couche d'amortissement recouvre complètement la paroi extérieure de l'anneau et est collée par un adhésif sur celui-ci et sur la la roue. En outre, la couche isolante est constituée en une matière déforma-

2

ble élastique et subit un écrasement permanent entre la roue et l'anneau métallique que l'on a placé et maintenu à un diamètre élargi après la pose. Cet effet d'écrasement, associé à l'utilisation d'un adhésif, favorise le contact intime de la couche d'amortissement sur toute sa surface avec les parois métalliques entre lesquelles elle est interposée et augmente l'effet d'amortissement.

En outre, cette précontrainte de l'anneau diminue le risque de décollement sous l'effet de la force centrifuge.

Dans le procédé d'insonorisation selon l'invention, la couche isolante est donc constituée d'une matière élastique déformable interposée entre l'anneau métallique et la jante et collée au moyen d'un adhésif sur la face extérieure de l'anneau et sur une surface d'application ménagée sur la face interne de la jante, l'anneau est coupé par une fente qui permet son élargissement et l'on exerce sur sa face interne et dans au moins trois directions radiales régulièrement réparties, une pression dirigée vers l'extérieur et déterminant une déformation par compression de la couche isolante, avec augmentation du diamètre de l'anneau et élargissement de la fente ; on bride alors l'anneau dans cette position et à ce diamètre et l'on peut supprimer la pression radiale, la couche isolante restant comprimée entre l'anneau élargi et la face interne de la jante.

Selon une autre caractérisitique du procédé on bride l'anneau sur la roue en plaçant dans la fente, après mise en compression de la couche isolante, une barrette de remplissage empêchant la diminution du diamètre de l'anneau après suppression de la pression radiale, sans constituer un "pont" susceptible de transmettre les vibrations.

Le dispositif d'insonorisation selon l'invention comprend donc d'une part une couche isolante en matière élastique déformable, interposée et collée entre l'anneau et la paroi interne de la jante et d'autre part, l'anneau étant muni d'une fente et susceptible de prendre un diamètre élargi sous l'action d'une pression radiale déterminant un écrasement de la couche isolante, un moyen de bridage de l'anneau au diamètre élargi ainsi obtenu.

Ce moyen de bridage de l'anneau est constitué, de préférence, par une barrette de longueur égale à la largeur prise par la fente de l'anneau après élargissement de celui-ci et écrasement de la couche isolante.

Dans un mode de réalisation préférentiel de l'invention, l'anneau métallique (2) a la forme d'une cornière circulaire comportant une aile en forme de virole centrée sur l'axe de la roue et une aile placée dans un plan sensiblement perpendiculaire audit axe, les deux ailes s'appliquant, avec interposition de la couche isolante, respectivement sur une surface cylindrique et sur une surface annulaire perpendiculaire à l'axe, ménagées à la jonction de la jante et du voile de la roue.

La surface cylindrique sur laquelle s'applique l'anneau d'insonorisation est ménagée de préférence dans le fond d'un évidement pratiqué dans la paroi interne de la jante et limité vers l'extérieur par un rebord de maintien de l'anneau.

L'invention sera mieux comprise en se référant à plusieurs modes de réalisation particuliers, donnés à titre d'exemples et représentés sur les dessins annexés.

La figure 1 est une vue de face d'une roue de chemin de fer classique.

La figure 2 est une vue en coupe axiale selon II-II, figure 1.

La figure 3 est une vue de face de l'anneau d'insonorisation.

La figure 4 et la figure 5 représentent, en vue de face, les deux étapes successives de la pose de l'anneau d'insonorisation.

La figure 6 est une section partielle, à échelle agrandie, selon VI-VI, figure 5.

Les figures 7, 8, 9 sont des sections partielles de jantes de roues munies de dispositif d'insonorisation selon des variantes de l'invention.

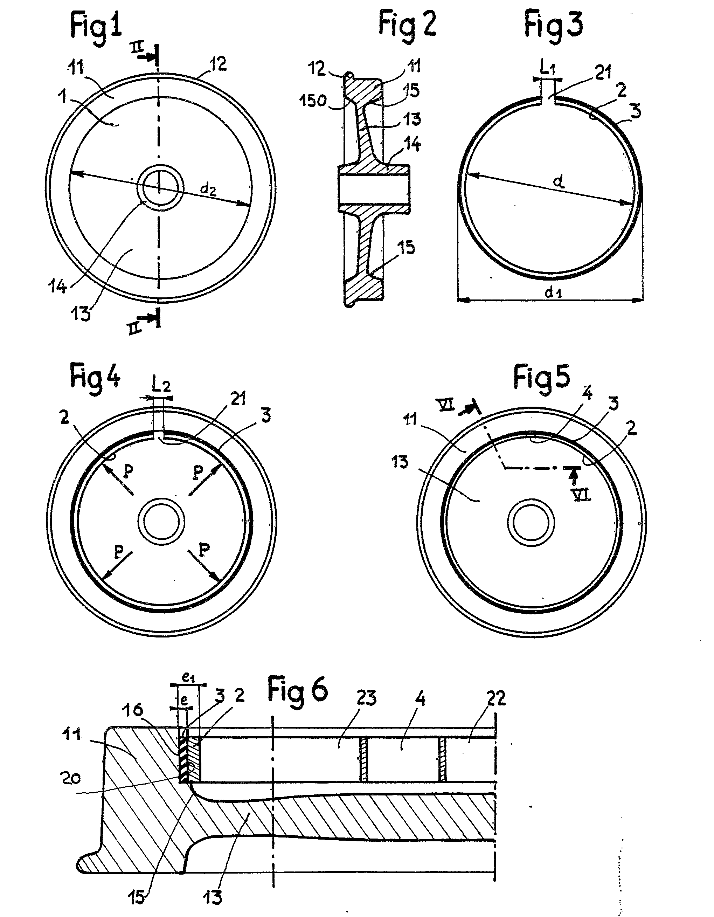

Sur les figures 1 et 2 , on a représenté, respectivement de face et en coupe axiale, une roue de chemin de fer 1 comprenant notamment une jante 11 munie d'un boudin 12 et reliée par une toile ou voile 13 à un moyeu 14.

Le voile 13 peut être plein ou constitué de rayons.

L'anneau d'insonorisation est représenté de face sur la figure 3 et l'on en voit une section sur la figure 6 qui est une coupe suivant VI-VI de la figure 5. Il se compose d'une virole métallique 2 de forme circulaire et /de faible largeur qui est recouverte extérieurement d'une couche isolante 3. La couche isolante 3, qui se trouve interposée, après la pose, entre l'anneau 2 et la jante 14 est en une matière visco-élastique choisie pour ses propriétés d'amortissement des vibrations et également pour sa facilité d'adhérence sur un métal. De préférence, la couche isolante 3 est collée à l'avance sur l'anneau métallique 2, par exemple par vulcanisation, mais elle pourrait également être collée d'abord sur la jante puis sur l'anneau au moyen d'un adhésif connu.

En tout état de cause, le diamètre (d) de l'anneau au repos est choisi de telle sorte que, compte tenu de l'épaisseur (e) (figure 4) de la

4

couche isolante 3, le diamètre externe d1 de l'anneau recouvert de l'isolant soit supérieur au diamètre interne d2 (figure 1) de la jante. D'autre part, une fente 21 de largeur (L1) est ménagée sur l'anneau métallique 2. La largeur (L1) est telle qu'elle permet, par une légère compression, de diminuer le diamètre de l'anneau jusqu'à une valeur inférieure au diamètre interne (d2) de la jante contre laquelle elle peut donc être appliquée facilement.

Pour poser l'anneau sur la jante, on procède donc de la façon suivante.

Comme on l'a indiqué, la couche isolante 3 a, de préférence, été tout d'abord fixée sur l'anneau par exemple par vulcanisation.

Une couche d'adhésif ayant été appliquée sur la paroi extérieure de la couche isolante recouvrant l'anneau et sur la paroi interne de la jante, on présente l'anneau devant la roue et, grâce à la fente 21, on diminue légèrement son diamètre pour l'appliquer sur la jante sur laquelle, par élasticité, il exerce une légère compression.

Par des moyens faciles à imaginer comme par exemple des vérins mécaniques, on exerce alors sur l'anneau et dans au moins trois directions radiales régulièrement réparties, une pression (P) d'écartement radial (figure 4) qui permet d'appliquer fortement l'anneau 2 sur la jante. On réalise ainsi un parfait étalement de l'adhésif et un léger écrasement de la couche isolante 3, la fente 21 ayant alors une largeur (L2).

On place alors dans la fente 21 une barrette 4 de longueur égale ou très peu inférieure à la largeur (L2) et l'on soude la barrette 4 (figure 6) sur les extrémités 22, 23 de l'anneau 2 qui l'encadrent de part et d'autre. On peut alors supprimer la pression radiale (P), la couche isolante (3) restant en compression.

Bien entendu, il est nécessaire que l'anneau s'applique parfaitement sur la paroi interne 15 de la jante 14. Comme celle-ci a le plus souvent une forme tronconique à angle au sommet très fermé, l'anneau 2 devrait avoir une forme tronconique correspondante.

Cependant, comme il est essentiel d'assurer la parfaite adhérence de la couche isolante sur la paroi interne 15 de la jante 14, chaque fois que cela est possible, on préférera effectuer un léger usinage de la paroi 15 et dans ce cas, on pourra réaliser une paroi cylindrique 16 sur laquelle peut s'appliquer l'anneau 2 constitué d'une virole également cylindrique.

Ainsi, grâce au procédé de pose selon l'invention, l'anneau étant bridé par la barrette 4 dans l'état où il se trouve après mise en compression de la couche isolante 3, celle-ci reste comprimée et adhère parfaite-

5

ment à la jante. De la sorte, on diminue les risques de décollement de l'anneau et l'on améliore très sensiblement l'amortissement des vibrations.

D'autre part, dans le dispositif qui vient d'être décrit, l'anneau d'insonorisation, constitué par une simple virole de faible largeur recouvrant seulement une partie de la paroi interne de la jante, est particulièrement léger et ne risque pas d'être décollé par l'effet de la force centrifuge. Pourtant, si l'on étudie le cheminement et les diverses réflexions des ondes sonores dans la jante, on constate que, de façon surprenante, l'anneau d'insonorisation selon l'invention permet, malgré sa faible largeur, d'obtenir un excellent amortissement des vibrations principales.

Il faut également noter que, grâce à la déformation élastique et à la parfaite adhérence de la couche isolante 3 sur la roue, qui est due à l'élargissement de l'anneau 2 maintenu en permanence par la barrette 4, il n'est plus indispensable de fixer l'anneau sur le voile 13 de la roue par des pattes qui auraient l'inconvénient d'augmenter l'encombrement et le poids du dispositif et d'établir une liaison entre l'anneau 2 et le voile 13.

Cependant, dans le cas des roues tournant à grande vitesse, on peut craindre que la fixation par simple adhérence de l'anneau 2 sur la jante 14, ne soit pas suffisante pour s'opposer aux effets de la force centrifuge, notamment lorsque l'anneau est légèrement tronconique.

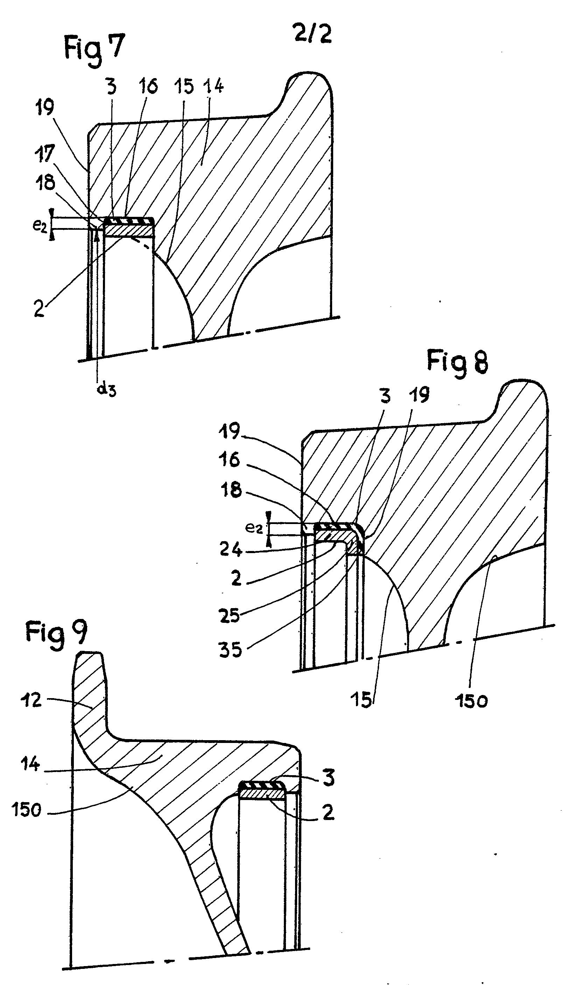

C'est pourquoi étant donné que, de toutes façons, il est intéressant de ménager par usinage une surface d'application cylindrique 16 sur la jante 14, il peut être utile, comme on l'a représenté sur la figure 7, de ménager la surface 16 dans le fond d'un évidement 17 pratiqué dans la paroi interne 15 de la jante. L'évidement 17 a une profondeur $e_2$ supérieure à l'épaisseur (e) de la couche isolante 3 de telle sorte que l'anneau 2 soit bloqué vers l'extérieur par le rebord circulaire 18 ainsi constitué.

Bien entendu, la largeur ($L_1$) de la fente 21 doit être telle que l'anneau puisse être comprimé jusqu'à un diamètre extérieur ($d_1$) inférieur au diamètre intérieur ($d_3$) du rebord 18 pour permettre la pose de l'anneau d'insonorisation.

Cette disposition permet de perfectionner encore le dispositif en donnant à l'anneau 2 la forme d'une cornière, comme on l'a représenté sur la figure 8. L'anneau 2 comporte alors une aile cylindrique 24 qui s'applique sur la surface usinée 16 et est prolongée par une aile radiale 25 située dans un plan perpendiculaire à l'axe et qui recouvre la paroi latérale 19 de l'évidement 17. Bien entendu, dans ce cas, la couche isolante 3 recouvre également l'aile radiale 25. Au moment de la pose, il est possible d'exercer sur l'anneau des efforts radiaux (P) légèrement inclinés par rapport à l'axe de façon à comprimer légèrement la partie 35 de la couche isolante recouvrant l'aile 25, cette légère compression étant maintenue par le rebord 18.

L'anneau 2 est ainsi rendu plus rigide, mais l'avantage essentiel de cette variante réside dans le fait que l'adjonction de l'aile radiale 25 même sur une faible hauteur améliore très sensiblement l'amortissement des vibrations de la roue en augmentant le champ d'action du dispositif.

On a observé, en effet, que les ondes sonores se réflèchissent sur les faces perpendiculaires de la jante et peuvent être piègées dans leur plus grande partie par un anneau en forme de cornière recouvrant simplement la jonction de la jante 11 et du voile 13 de la roue.

L'anneau d'insonorisation selon l'invention présente donc l'avantage d'assurer un excellent amortissement des vibrations malgré un faible encombrement qui lui lui permet d'être employé en toute sécurité même sur les essieux tournant à grande vitesse en évitant le risque de décollement sous l'effet de la force centrifuge. De plus, la paroi latérale 19 de la jante 11 ainsi que le voile 13 se trouvent entièrement dégagés et le dispositif n'apporte donc aucune gêne à la circulation sur les voies, et notamment dans les aiguillages.

En outre, grâce à cet avantage il est possible de monter l'anneau d'insonorisation selon l'invention sur les roues de chemin de fer ayant une jante de faible épaisseur.

C'est le cas de la variante représentée sur la figure 9 qui représente à titre d'exemple, la jante d'une roue de sécurité pour voiture de métro roulant sur pneumatique.

On sait en effet, que lorsque les essieux des voitures de métro sont sur pneumatiques, il est nécessaire d'assurer la direction du véhicule par des roues du genre chemin de fer qui ont un boudin de guidage 12 important mais dont la jante 14 peut être de faible épaisseur du fait qu'elle n'a de rôle porteur qu'en cas de crevaison.

Les dispositifs classiques ne pouvaient pas être placés sur de telles roues en raison de leur encombrement.

Au contraire, comme on le voit sur la figure 9 le dispositif selon l'invention s'applique particulièrement bien à ce type de roues. Il semble inutile d'insister sur le grand avantage apporté par l'invention dans ce cas, l'insonorisation des roues étant évidemment encore plus importante dans le cas des chemins de fer urbains.

Dans tous les cas représentés, l'anneau d'insonorisation était placé sur le côté extérieur de la roue. Cependant, du fait de son faible encombrement, il est possible également de placer un anneau d'insonorisation sur la paroi latérale interne 150 de la roue, ce qui n'était pas le cas, généralement dans les dispositifs utilisés jusqu'à présent. Il est ainsi possible ... par des études de la transmission des vibrations, de choisir avec précision l'endroit le plus judicieux pour la pose de l'anneau d'insonorisation de façon à obtenir les meilleurs performances avec un anneau de faible dimension.

Bien entendu, on pourrait imaginer d'autres variantes que celles qui ont été décrites, l'invention n'étant pas limitée à celles-ci et pouvant être modifiée notamment par l'emploi de moyens équivalents.

D'autre part, si l'invention a été décrite dans son application aux véhicules ferroviaires, il est bien certain qu'elle pourra être utilisée, d'une façon générale, chaque fois qu'il sera intéressant d'amortir les vibrations d'une roue métallique pour réduire le bruit ou dans un autre but.

8

## REVENDICATIONS

1.- Procédé d'insonorisation d'une roue (1) de chemin de fer au moyen d'un profilé circulaire en forme d'anneau (2) s'appliquant sur une surface (16) ménagée au moins sur la paroi interne de la jante (11) de la roue (1), caractérisé par le fait que l'on interpose entre la face extérieure (20) de l'anneau (2) et la surface d'application (16) une couche isolante (3) en matière élastique déformable, que l'on colle la couche isolante (3) sur l'anneau (2) et sur la surface d'application (16) au moyen d'un adhésif, que, l'anneau (2) étant coupé par une fente(21), on exercesur sa face interne et dans au moinstrois directions radiales régulièrement réparties, une pression dirigée vers l'extérieur, déterminant une déformation par compression de la couche isolante (3) avec augmentation'du diamètre de l'anneau (2) et élargissement de la fente (21), que l'on bride alors l'anneau dans cette position et à ce diamètre et que l'on supprime enfin la pression radiale, la couche isolante (3) restant comprimée entre l'anneau élargi (2) et la surface d'application (16).

2.- Procédé d'insonorisation selon la revendication 1, caractérisé par le fait que, la couche isolante (3) étant collée à l'avance sur l'anneau (2) et l'ensemble ayant, au repos et un diamètre extérieur légèrement supérieur à celui de la surface d'application (16), on comprime l'anneau (2)/puis on le laisse s'appliquer sur la surface (16) préalablement encollée, et l'on met ensuite en place un moyen d'écartement pour l'application de la pression radiale de compression de la couche isolante (3).

3.- Procédé d'insonorisation selon la revendication 1, caractérisé par le fait que l'on bride l'anneau (2) en plaçant dans la fente (21) après mise en compression de la couche isolante (3) une barrette (4) de remplissage empêchant la diminution de diamètre de l'anneau après suppression de la pression radiale.

4.- Dispositif d'insonorisation d'une roue de chemin de fer (1) constituée d'une jante (11) reliée par un voile (13) à un moyeu (14), le dispositif comportant un profilé circulaire en forme d'anneau (2) s'appliquant sur une surface (16) ménagée au moins sur la paroi interne de la jante (11), caractérisé par le fait que l'anneau (2) est muni d'une fente permettant une augmentation de son diamètre sous l'action d'une pression appliquée radialement après sa pose sur la roue (1) et que le dispositif comprend une couche isolante (3), en matière élastique déformable interposée entre la surface extérieure (20) de l'anneau (2) et la surface d'applica- tion (16) de la jante et collée par un adhésif sur lesdites surfaces (20) et (16) et un moyen de bridage de l'anneau (2) à un diamètre élargi obtenu par application d'une pression radiale déterminant un écrasement de la couche isolante (3) entre l'anneau (2) et la surface d'application (16).

5.- Dispositif d'insonorisation selon la revendication 4, caractérisé par le fait que le moyen de bridage de l'anneau est constitué par une barrette de longueur égale à la largeur prise par la fente de l'anneau après élargissement de celui-ci et écrasement de la couche isolante.

6.- Dispositif d'inonorisation selon l'une des revendications 4 et 5, caractérisé par le fait que l'anneau (2) est constitué, au moins dans sa plus grande partie, par une virole cylindrique ou tronconique (24) de faible largeur.

7.- Dispositif d'insonorisation selon la revendication 5, caractérisé par le fait que l'anneau (2) à la forme d'une cornière circulaire comportant une aile (24) en forme de virole centrée sur l'axe de la roue et une aile (25) sensiblement perpendiculaire audit axe, les deux ailes (24,25) s'appliquant respectivement sur une surface cylindrique (16) ménagée sur la paroi interne (15) de la jante (11) et sur une surface annulaire (19) perpendiculaire à l'axe, ménagée à la jonction de la jante (11) et du voile (13) de la roue (1).

8;- Dispositif d'insonorisation selon l'une des revendications 5 et 6, caractérisé par le fait que la surface (16) sur laquelle s'applique l'anneau (2) est ménagée dans le fond d'un évidement (17) pratiqué dans la paroi interne (15) de la jante (11) et limité vers l'extérieur par un rebord (18) de maintien de l'anneau (2).

1/2

Fig 1

Fig 2

Fig 3

Fig 4

Fig 5

Fig 6

Fig 7

Fig 8

Fig 9

Office européen
des brevets

Numéro de la demande

EP 81 40 1628

# RAPPORT DE RECHERCHE EUROPEENNE

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendica-tion concernée | |
| D(X) | <u>GB - A - 445 124</u> (TAYLOR)<br><br>* page 1, ligne 54 - page 2, ligne 37; figures 1,3 *<br><br>-- | 1,6,7 | B 60 B 17/00 |
| A | <u>US - A - 1 852 538</u> (PETERSON)<br><br>* page 2, lignes 4-64; figures 1,2 *<br><br>-- | | |
| A | <u>US - A - 1 813 820</u> (ROSS)<br><br>* page 1, ligne 50 - page 2, ligne 9; figures 1-3 *<br><br>-- | | **DOMAINES TECHNIQUES RECHERCHES (Int. Cl. 3)**<br><br>B 60 B 17/00<br>3/00 |
| A | <u>US - A - 3 080 771</u> (BALDWIN)<br><br>* colonne 2, lignes 1-9; figures 1,4 *<br><br>-- | | |
| A | <u>FR - A - 1 036 943</u> (BOCHUMER <u>VEREIN)</u><br><br>* page 2, colonne de droite, lignes 15-19; figure 7 *<br><br>-- | | **CATEGORIE DES DOCUMENTS CITES** |
| A | <u>DE - C - 43 128</u> (PECKHAM)<br><br>* en entier; figures 1,2,5 *<br><br>-- ./. | | X: particulièrement pertinent à lui seul<br>Y: particulièrement pertinent en combinaison avec un autre document de la même catégorie<br>A: arrière-plan technologique<br>O: divulgation non-écrite<br>P: document intercalaire<br>T: théorie ou principe à la base de l'invention<br>E: document de brevet antérieur, mais publié à la date de dépôt ou après cette date<br>D: cité dans la demande<br>L: cité pour d'autres raisons |
| | | | &: membre de la même famille, document correspondant |

| | Le présent rapport de recherche a été établi pour toutes les revendications | |
|---|---|---|
| Lieu de la recherche<br>La Haye | Date d'achèvement de la recherche<br>20-01-1982 | Examinateur<br>AYITER |

OEB Form 1503.1 06.78

0050567

| | DOCUMENTS CONSIDERES COMME PERTINENTS | | CLASSEMENT DE LA DEMANDE (Int. Cl. ³) |
|---|---|---|---|
| Catégorie | Citation du document avec indication, en cas de besoin, des parties pertinentes | Revendica-tion concernée | |
| A | US - A - 2 605 132 (WATTER) <br><br> * colonne 2, lignes 12-32; figures 2-4 * <br><br> --- | | |
| E (X) | EP - A - 0 034 911 (TITANIUM METALS) <br><br> * en entier; figure 1 * <br><br> ----- | 1,2,4 | |
| | | | DOMAINES TECHNIQUES RECHERCHES (Int. Cl. ³) |